# EUROPEAN PATENT SPECIFICATION

(11) **EP 1 736 325 B1**
(45) Date of publication and mention of the grant of the patent: **15.12.2010**
(21) Application number: 06380125.2
(22) Date of filing: 23.05.2006
(51) Int. Cl.: B60B 7/00, B60B 7/02

(54) **Hubcap or wheel cover unit**
Nabenkappe oder Radzierblende
Cache moyeu ou enjoliveur de roue

(30) Priority: 22.06.2005 ES 200501524
(43) Date of publication of application: 27.12.2006
(73) Proprietor: Maier, S. Coop., 48300 Gernika (ES)
(72) Inventor: Mandaluniz Bilbao, Joseba, 48300 Gernika (ES)
(74) Representative: Urteaga Simarro, José Antonio

(56) References cited:
- EP-A1- 1 375 193
- US-B1- 6 443 531

## Description

### Technical Field

The invention relates to a hubcap or wheel cover unit for a motor vehicle, where a hubcap or wheel cover unit is understood to be a set of parts designed to embellish the rim of a wheel and to bear the distinguishing badge of the make of vehicle.

### Prior Art

The function of a hubcap unit, like that of a wheel cover unit, is for it to be positioned on the wheel rim of the vehicle and cover the hub of the wheel, thereby covering the area where the bolts enabling the wheel to be taken off and put on are located. Wheel cover units are used in steel wheel rims, and consequently are of a greater size in order to cover the wheel rim almost completely. By contrast hubcap units are used on alloy wheel rims, provided with an attractive aesthetic finish, and consequently are of a reduced size designed to cover only the central area of the wheel rim, where the hub and/or the bolts are located.

Hubcap or wheel cover units must be provided with the necessary means to be connected to the central area of the wheel rim. For this purpose, the hubcap or wheel cover units known in the prior art usually comprise a main part to which the badge is connected and which includes a series of pins capable of being clipped on protuberances present in the central area of the rim. Very frequently, a drawback arises due to the fact that the pins disposed on the hubcap or wheel cover units are not sufficiently rigid to guarantee a sturdy and lasting clipping of the hubcap and wheel cover unit to the wheel rim. This lack of rigidity of the pins is normally due to two factors. Firstly, the material used to manufacture the main part is usually selected according to economic criteria, as a result of which it does not always perform optimally in terms of, for example, its stability in external conditions (this factor is very common in the automotive industry, it being common in said industry for the design of parts to be adapted to material selection and to address the technical shortcomings that may derive from said selection. Secondly, the pins may be too slender, due to the impossibility of manufacturing main parts with large pins by the injection of thermoplastics (if the volume of the plastic in the area of the pins is increased excessively, cavities may appear on the face of the main parts which is opposite to the area where the pins are located, negatively affecting the aesthetic aspect of the main part). To overcome this drawback, the hubcap or wheel cover unit usually also comprises a metallic ring designed to reinforce the fixing of the pins. This reinforcement ring prevents the pins from being deformed and the main part from disconnecting from the wheel rim. Examples of hubcap or wheel cover units provided with a reinforcement ring can be found in the documents US-20040095013-A1 and FR-2797807-A1.

Documents US 6 443 531 and EP 1 375 193 each describe the preamble of claim 1.

On another note, hubcap or wheel cover units usually incorporate a badge representing the vehicle mark or model. Said badge can be mono-component (e.g., comprising one symbol or various interlinked symbols) or multi-component (e.g., comprising various separated symbols), and can be formed by as many separated parts and components that the badge itself has. The badge is generally fixed to the outer face or most visible face of the main part of the hubcap or wheel cover unit by welding, glueing, clipping or other suitable fixing means.

The present invention sets out to propose an alternative to hubcap or wheel cover units provided with a main part, a ring and a mono- or multi-component badge, in which the correct reinforcement of the pins is achieved and, at the same time, a series of advantages over conventional hubcap or wheel cover units with a ring and mono- or multi-component badge is provided.

### Brief description of the invention

It is an object of this invention to provide a hubcap unit or wheel cover unit that comprises a main part and an additional part (hereinafter referred to as a 'reinforcement part') that contributes to the fixing of the main part on the wheel rim and which also includes the badge of the hubcap unit or wheel cover unit.

From this point on and throughout this description, with a view to not overly complicating said description, reference shall only be made to the hubcap unit, although it should be borne in mind that all mentioned features can equally be applied to a wheel cover unit unless the contrary is expressly stated.

The main part of the inventive hubcap unit, like the main parts of conventional hubcap units, comprises a base from which the fixing elements (pins and others) responsible for fixing the hubcap unit to the wheel rim project outwards. The reinforcement part is connected to the inner area of the main part, said reinforcement part comprising a base and at least one reinforcement element that projects from the base. The reinforcement elements, like the conventional rings, remain adjacent to the fixing elements of the main part, so that when the hubcap unit is connected to the wheel rim and the wheel rim exerts a force on the fixing elements towards the interior of the unit and tends to deform said fixing elements inwards, the reinforcement elements push said elements outwards, reinforcing their clipping to the wheel rim. In this way, the pushing force exerted by the reinforcement part on the inventive fixing elements is as satisfactory as that exerted by the conventional rings.

As has been stated, the hubcap unit is preferably provided with a badge, and in this case the inventive reinforcement part comprises, in addition to the reinforcement elements, the aforementioned badge. Said badge is preferably provided on the base of the reinforcement part, and certain areas formed on the base of the main part of the hubcap unit allow the badge to be visible from the exterior of the wheel.

By putting together in one part the badge function and the ring function known in conventional hubcap units, the inventive hubcap unit made of only two parts achieves providing the same features as conventional hubcap units provided with a main part, a ring and a a mono- or multi-component badge, i.e. provided with at least three independent parts. This reduction in the number of parts gives the inventive hubcap unit multiple advantages over hubcap units provided with a ring, among them the fact that the inventive hubcap unit presents a simpler traceability and a lower manufacturing cost. In addition, the fact that it does not need a metallic ring, therefore it being possible to manufacture all parts of the hubcap unit by similar manufacturing processes (e.g., by the injection of thermoplastics), simplifies and reduces the cost of the hubcap unit manufacture.

### Brief description of the figures

Details of the invention can be seen in the figures attached, said figures not aiming to restrict the scope of the invention:
- Figure 1 shows a perspective of an embodiment of the invention, in the pre-assembly phase.
- Figure 2 shows another perspective of the embodiment of Figure 1, in the pre-assembly phase.
- Figure 3 shows a perspective of the embodiment of Figure 1, following assembly.
- Figure 4 shows another perspective of the embodiment of Figure 1, following assembly.

### Detailed description of the invention

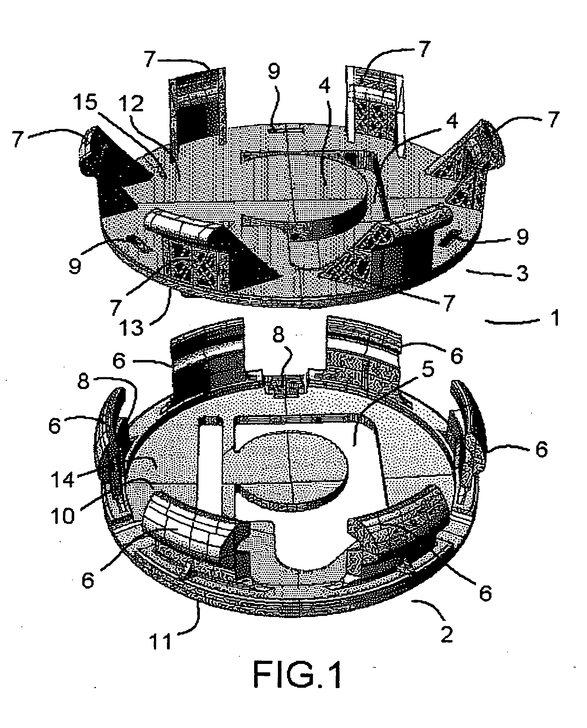

Figure 1 shows a perspective of an embodiment of the invention in the pre-assembly phase. It can be seen how the hubcap unit (1) comprises two parts, a main part (2) and a reinforcement part (3). The main part (2) is mainly made up of a base (14), of which its inner face (10) is visible and its outer face (11) is hidden, and from whose inner face (10) projects a series of fixing elements (6) in the form of pins, for the fixing of the hubcap unit (1) to the wheel rim. On its side, the reinforcement part (3) is mainly formed by a base (15), of which its inner face (12) is visible and its outer face (13) is hidden, and from whose inner face (12) projects a series of reinforcement elements (7) in the form of pillars, that will contribute to the action of the fixing elements (6) of the main part (2). In the present embodiment of the invention the reinforcement part (3) comprises one reinforcement element (7) for each fixing element (6) of the main part (2).

In the embodiment of the figure, the hubcap unit (1) includes a badge (4), for which the base (15) of the reinforcement part (3) is provided with an emboss that defines the aforementioned badge (4), while the base (14) of the main part (2) is provided with areas (5) designed to leave the badge (4) of the reinforcement part (3) visible. In the case of it being made as an independent part, the badge (4) of the figure would have been a multi-component badge comprising two components, whereas in the case of the present embodiment, the badge (4) forms an integral part of the reinforcement part (3).

Preferably, at least the badge (4) of the reinforcement part (3) is decorated by process of painting, chroming or other applicable process, so that the badge (4) that remains visible from the exterior presents a pronounced aesthetic appearance over the hubcap unit (1). It is foreseeable that, in practice, it will be simpler to decorate the complete reinforcement part (3), although only the badge (4) is visible from the exterior.

The main part (2) and the reinforcement part (3), represented in the pre-assembly phase, are to be assembled by approximating them until certain fixing means (8, 9) begin to act. In this case, said fixing means (8, 9) are provided in the base (14) of the main part (2) and the base (15) of the reinforcement part (3) and in the form of a series of clips (8) in the main part (2) and holes (9) in the reinforcement part (3) for the coupling of the clips (8).

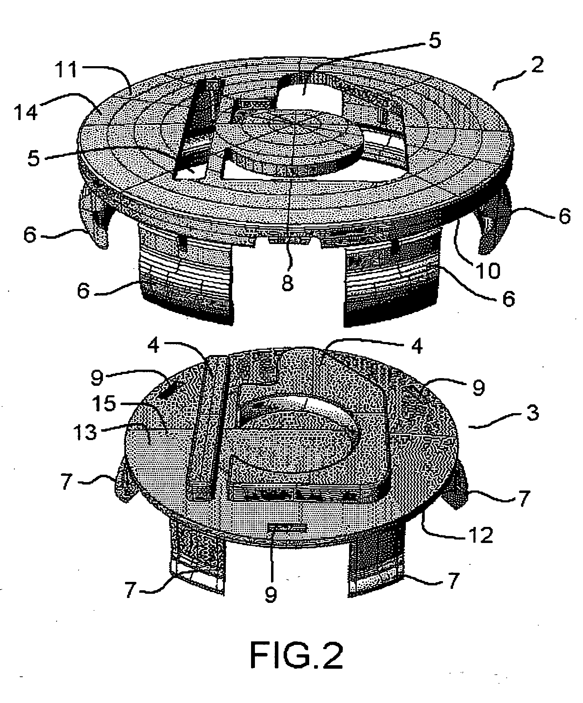

Figure 2 shows another perspective of the embodiment of Figure 1, in the pre-assembly phase. In this perspective the badge (4) formed in the reinforcement part (3) can be seen and it can be understood how said badge (4) will be visible through the open areas (5) of the main part (2) when the main part (2) and the reinforcement part (3) are assembled.

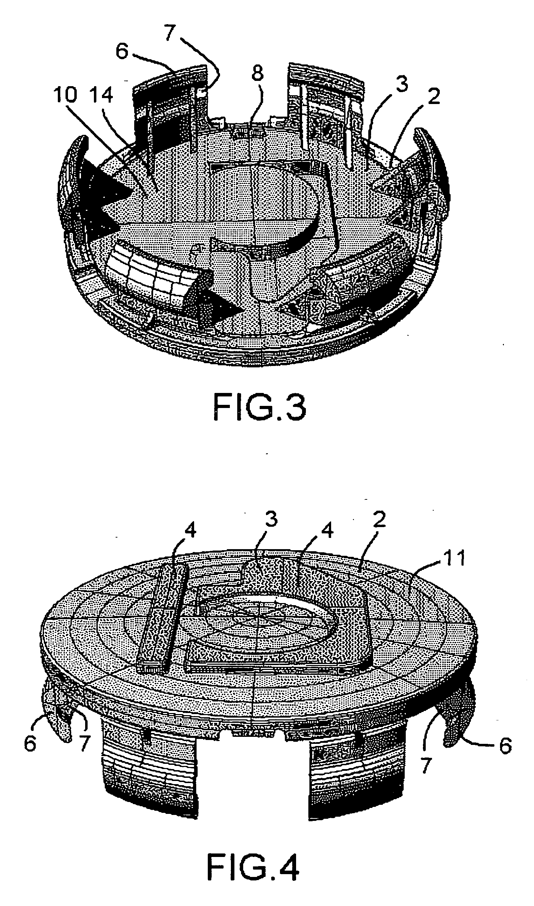

Figure 3 shows a perspective of the embodiment of the hubcap unit (1) of Figure 1, with the main part (2) and the reinforcement part (3) having been assembled, and said assembly being secured by means of the clips (8). As can be seen in the figure, each fixing element (6) or pin of the main part (2) is reinforced by a reinforcement element (7) or pillar of the reinforcement part (3), so that when the hubcap unit (1) is mounted on the wheel rim, said reinforcement elements (7) exert a force in a radial direction and towards the exterior on the fixing elements (6), contributing to their being fixed onto the wheel rim.

Figure 4 shows another perspective of the embodiment of the hubcap unit (1) of Figure 1, with the main part (2) and the reinforcement part (3) having been assembled. In this figure it can be seen that the badge (4) of the reinforcement part (3) projects from the outer face (11) of the main part (2). Usually, said badge (4) includes a different decoration to that of the main part (2).

In the embodiment represented in the figures, the base (15) of the reinforcement part (3) is closed, whereas the base (14) of the main part (2) presents the openings or areas (5) that allow the badge (4) to be visible. In other words, it can be considered that the part that performs the function of covering the area of the hub of the wheel rim is the main part (2). In this respect, the invention contemplates other different embodiments. One embodiment is that in which the base (15) of the reinforcement part (3) is open or closed, and the base (14) of the main part (2) is closed, i.e. it is the main part (2) at least that performs the function of a cover. In this case the badge (4) can be formed as an integral part of the main part (2) or can be formed separately (mono- or multi-component) and fixed to said main part (2). Another embodiment is a variation of the previous one, in which the hubcap unit (1) does not include a badge.

As regards the embodiment of the fixing elements (6) and the reinforcement elements (7) of the main part (2) and the reinforcement part (3) respectively, these elements (6, 7) can present different forms. Preferably, and as shown in the figures, the fixing elements (6) take the form of pins and the reinforcement elements (7) take the form of pillars situated behind the pins. In other embodiments, the fixing elements (6) can be of a greater or smaller length and number, and the reinforcement elements (7) can be continuous, discontinuous, ribs or any type of reinforcement that contributes to the function of fixing the hubcap unit (1) onto the wheel rim.

Thus, an alternative mode of embodiment of the invention is that in which a hubcap unit is provided with a main part and a reinforcement part, where the reinforcement part is not provided with a badge and presents a form of crown, i.e. it presents an open base (to achieve the saving of material and/or due to a lack of space between the wheel rim and the main part) and reinforcement elements (7) in the form of pillars.

In addition, the union between the main part (2) and the reinforcement part (3) is formed in a preferably mechanical form by means of specific mechanical fixing means (8, 9) as shown in the figures. However, other fixing means different to clips can be used, such as non-mechanical fixing means such as welding or glueing, or other mechanical fixing means, such as metallic staples. The invention even contemplates the formation of an optimised design of the main part (2) and/or reinforcement part (3) that makes the use of specific fixing means (8, 9) unnecessary.

## Claims

1. Hubcap or wheel cover unit (1) to be fixed to a motor vehicle wheel rim and cover a specific area of the wheel rim, comprising:
- a main part (2), that comprises a base (14) and at least one fixing element (6) for the fixing of the hubcap or wheel cover unit (1) onto the wheel rim; and
- a reinforcement part (3), that comprises a base (15), **characterised in that** the reinforcement part (3) further comprises at least one reinforcement element (7) to contribute to the fixing onto the wheel rim of the fixing elements (6) of the main part (2) by reinforcing the fixing element.

2. Hubcap or wheel cover unit (1), in accordance with claim 1, **characterised in that** a base (14) of the main part (2) is closed.

3. Hubcap or wheel cover unit (1), in accordance with claim 1 or 2, **characterised in that** a base (14, 15) comprises a badge (4).

4. Hubcap or wheel cover unit (1), in accordance with claim 1, **characterised in that** the base (15) of the reinforcement part (3) is closed.

5. Hubcap or wheel cover unit (1), in accordance with claim 1 or 4, **characterised in that** the base (15) of the reinforcement part (3) comprises at least one badge (4), and the base (14) of the main part (2) comprises at least one area (5) that leaves the badge (4) visible.

6. Hubcap or wheel cover unit (1), in accordance with claim 5, **characterised in that** at least the badge (4) of the reinforcement part (3) includes a decoration different to that of the main part (2).

7. Hubcap or wheel cover unit (1), in accordance with claim 1, **characterised in that** the reinforcement part (3) comprises a reinforcement element (7) for each fixing element (6) of the main part (2).

8. Hubcap or wheel cover unit (1), in accordance with claim 1, **characterised in that** the main part (2) and the reinforcement part (3) are fixed together through at least one fixing means (8, 9).

9. Hubcap or wheel cover unit (1), in accordance with claim 8, **characterised in that** the fixing means (8, 9) are formed in the base (14) of the main part (2) and/or the base (15) of the reinforcement part (3).

10. Hubcap or wheel cover unit (1), in accordance with claim 8, **characterised in that** the fixing means (8, 9) comprise a welding.

11. Hubcap or wheel cover unit (1), in accordance with claim 8, **characterised in that** the fixing means (8, 9) comprise a glueing element.

12. Hubcap or wheel cover unit (1), in accordance with claim 8, **characterised in that** the fixing means (8, 9) comprise mechanical fixing means.

13. Hubcap or wheel cover unit (1) in accordance with claim 12, **characterised in that** the fixing means (8, 9) comprise clips (8) and holes (9) for the coupling of clips (8).

14. Hubcap or wheel cover unit (1), in accordance with claim 12, **characterised in that** the fixing means (8, 9) comprise staples and holes for coupling the staples.

## Patentansprüche

1. Radkappe oder Rad-Abdeckungselement (1) zur Befestigung an der Radfelge eines Motorfahrzeugs und zur Abdeckung einer spezifischen Fläche der Radfelge, bestehend aus:
- einem Hauptteil (2), der eine Basis (14) und mindestens ein Befestigungselement (6) zum Befestigen der Radkappe oder des Rad-Abdeckungselements (1) an der Radfelge umfasst, sowie einem Verstärkungsteil (3), der eine Basis (15) umfasst,
- **dadurch gekennzeichnet, dass** der Verstärkungsteil (3) außerdem mindestens ein Verstärkungselement (7) umfasst, um zur Befestigung der Befestigungselemente (6) des Hauptteils (2) an der Radfelge beizutragen, indem das Befestigungselement verstärkt wird.

2. Radkappe oder Rad-Abdeckungselement (1) nach Anspruch 1, **dadurch gekennzeichnet, dass** die Basis (14) des Hauptteils (2) geschlossen ist.

3. Radkappe oder Rad-Abdeckungselement (1) nach Anspruch 1 oder 2, **dadurch gekennzeichnet, dass** eine Basis (14, 15) eine Plakette (4) umfasst.

4. Radkappe oder Rad-Abdeckungselement (1) nach Anspruch 1, **dadurch gekennzeichnet, dass** die Basis (15) des Verstärkungsteils (3) geschlossen ist.

5. Radkappe oder Rad-Abdeckungselement (1) nach Anspruch 1 oder 4, **dadurch gekennzeichnet, dass** die Basis (15) des Verstärkungsteils (3) mindestens eine Plakette (4) umfasst, und die Basis (14) des Hauptteils (2) mindestens eine Fläche (5) umfasst, die die Plakette (4) sichtbar werden lässt.

6. Radkappe oder Rad-Abdeckungselement (1) nach Anspruch 5, **dadurch gekennzeichnet, dass** mindestens die Plakette (4) des Verstärkungsteils (3) eine Dekoration aufweist, die sich von der des Hauptteils (2) unterscheidet.

7. Radkappe oder Rad-Abdeckungselement (1) nach Anspruch 1, **dadurch gekennzeichnet, dass** der Verstärkungsteil (3) ein Verstärkungselement (7) für jedes Befestigungselement (6) des Hauptteils (2) umfasst.

8. Radkappe oder Rad-Abdeckungselement (1) nach Anspruch 1, **dadurch gekennzeichnet, dass** der Hauptteil (2) und der Verstärkungsteil (3) durch mindestens ein Befestigungsmittel (8, 9) aneinander befestigt sind.

9. Radkappe oder Rad-Abdeckungselement (1) nach Anspruch 8, **dadurch gekennzeichnet, dass** das Befestigungsmittel (8, 9) in der Basis (14) des Hauptteils (2) und/oder der Basis (15) des Verstärkungsteils (3) geformt wird.

10. Radkappe oder Rad-Abdeckungselement (1) nach Anspruch 8, **dadurch gekennzeichnet, dass** das Befestigungsmittel (8, 9) aus einer Schweißung besteht.

11. Radkappe oder Rad-Abdeckungselement (1) nach Anspruch 8, **dadurch gekennzeichnet, dass** das Befestigungsmittel (8, 9) aus einem Klebstoffelement besteht.

12. Radkappe oder Rad-Abdeckungselement (1) nach Anspruch 8, **dadurch gekennzeichnet, dass** das Befestigungsmittel (8, 9) aus einem mechanischen Befestigungsmittel besteht.

13. Radkappe oder Rad-Abdeckungselement (1) in Übereinstimmung mit Anspruch 12, **dadurch gekennzeichnet, dass** das Befestigungsmittel (8, 9) aus Clips (8) und Löchern (9) für die Verbindung der Clips (8) besteht.

14. Radkappe oder Rad-Abdeckungselement (1) nach Anspruch 12, **dadurch gekennzeichnet, dass** das Befestigungsmittel (8, 9) aus Heftklammern und Löchern für die Verbindung der Heftklammern besteht.

## Revendications

1. Enjoliveur ou chapeau de roue (1) à fixer sur la jante de roue d'un véhicule à moteur et qui couvre une partie spécifique de la jante de roue, comprenant :
- une pièce principale (2), qui comprend une base (14) et au moins un élément de fixation (6) pour fixer l'enjoliveur ou le chapeau de roue (1) sur la jante de roue, et une pièce de renfort (3) qui comprend une base (15),
- **caractérisé par le fait que** la pièce de renfort (3) comprend ensuite au moins un élément de renfort (7) pour assister la fixation sur la jante de roue des éléments de fixation (6) de la pièce principale (2) en renforçant l'élément de fixation.

2. Enjoliveur ou chapeau de roue (1) conformément à la revendication 1, **caractérisé par le fait que** la base (14) de la pièce principale (2) est fermée.

3. Enjoliveur ou chapeau de roue (1) conformément à la revendication 1 ou 2, **caractérisé par le fait qu'**une base (14, 15) comprend un symbole (4).

4. Enjoliveur ou chapeau de roue (1) conformément à la revendication 1, **caractérisé par le fait que** la base (15) de la pièce de renfort (3) est fermée.

5. Enjoliveur ou chapeau de roue (1), conformément à la revendication 1 ou 4, **caractérisé par le fait que** la base (15) de la pièce de renfort (3) comprend au moins un symbole (4), et que la base (14) de la pièce principale (2) comprend au moins une zone (5) qui laisse le symbole (4) à découvert.

6. Enjoliveur ou chapeau de roue (1) conformément à la revendication 5, **caractérisé par le fait que** le symbole (4) de la pièce de renfort (3) comprend un décor différent de celui de la pièce principale (2).

7. Enjoliveur ou chapeau de roue (1) conformément à la revendication 1, **caractérisé par le fait que** la pièce de renfort (3) comprend un élément de renfort (7) pour chaque élément de fixation (6) de la pièce principale (2).

8. Enjoliveur ou chapeau de roue (1) conformément à la revendication 1, **caractérisé par le fait que** la pièce principale (2) et la pièce de renfort (3) sont fixées ensemble par au moins un moyen de fixation (8, 9).

9. Enjoliveur ou chapeau de roue (1) conformément à la revendication 8, **caractérisé par le fait que** les moyens de fixation (8, 9) sont formés à la base (14) de la pièce principale (2) et/ou la base (15) de la pièce de renfort (3).

10. Enjoliveur ou chapeau de roue (1) conformément à la revendication 8, **caractérisé par le fait que** les moyens de fixation (8, 9) comprennent une soudure.

11. Enjoliveur ou chapeau de roue (1) conformément à la revendication 8, **caractérisé par le fait que** les moyens de fixation (8, 9) comprennent un élément adhésive.

12. Enjoliveur ou chapeau de roue (1) conformément à la revendication 8, **caractérisé par le fait que** les moyens de fixation (8, 9) comprennent des moyens de fixation mécaniques.

13. Enjoliveur ou chapeau de roue (1) conformément à la revendication 12, **caractérisé par le fait que** les moyens de fixation (8, 9) comprennent des clips (8) et des orifices (9) pour la fixation des clips (8).

14. Enjoliveur ou chapeau de roue (1) conformément à la revendication 12, **caractérisé par le fait que** les moyens de fixation (8, 9) comprennent des agrafes et des orifices pour fixer les agrafes.
